# EUROPEAN PATENT APPLICATION

(11) **EP 3 675 102 A1**
(43) Date of publication of application: **01.07.2020**
(21) Application number: 18861556.1
(22) Date of filing: 28.09.2018
(51) Int. Cl.: G09G 3/32, G09G 3/00

(54) **DISPLAY DEVICE AND CONTROL METHOD FOR SAME**

(30) Priority: 29.09.2017 KR 20170127639
(71) Applicant: Samsung Electronics Co., Ltd., Suwon-si, Gyeonggi-do 16677 (KR)
(72) Inventor: IM, Sang Kyun, Seoul 01775 (KR); CHOI, Hye-Rin, Yongin-si Gyeonggi-do 16944 (KR)
(74) Representative: Appleyard Lees IP LLP
(86) International application number: PCT/KR2018/011598
(87) International publication number: WO 2019/066593

(57) **Abstract**

A display apparatus and a controlling method thereof are provided therein so that it is possible to prevent deterioration of image quality or distortion of an image even when a defect exists in an alignment state of an LED module by correcting the image to be displayed on an LED panel in advance by using the alignment state information of the LED module, and then displaying the image on the LED panel.

In accordance with an aspect of the present embodiment, a display apparatus includes an LED panel including a plurality of LED modules; an image receiver configured to receive an input image to be displayed on the LED panel; an image corrector configured to correct the input image based on alignment state information of the plurality of LED modules; and a controller configured to control the LED panel to display the corrected input image.

## Description

### [Technical Field]

Embodiments of the disclosure relate to an LED display apparatus and a controlling method thereof.

### [Background Art]

LED display devices using light emitting diodes (LEDs) as light emitting devices have excellent brightness and color characteristics compared to other display devices such as a display device using a plasma display panel (PDP), a display device using a cathode ray tube (CRT), a liquid crystal display (LCD) panel and a display device using a backlight unit.

In addition, since the LED display device has a modular structure in which a plurality of modules are arranged to form one large screen, the LED display device can adjust the size of the entire screen or implement a desired shape in various ways.

Accordingly, the LED display device is used for various purposes such as indoor/outdoor billboards, indoor/outdoor information boards, stadium billboards, and indoor/outdoor backdrops.

### [Disclosure]

### [Technical Problem]

One aspect provides a display apparatus and a control method thereof capable of preventing degradation of image quality or distortion of an image even when a defect exists in an alignment state of an LED module by calibrating the image to be displayed on an LED panel in advance using the alignment state information of the LED module, and then displaying the image on the LED panel.

### [Technical Solution]

In accordance with an aspect of the disclosure, a display apparatus comprises an LED panel including a plurality of LED modules; an image receiver configured to receive an input image to be displayed on the LED panel; an image corrector configured to correct the input image based on alignment state information of the plurality of LED modules; and a controller configured to control the LED panel to display the corrected input image.

The image corrector may be configured to correct a plurality of partial images to be displayed on the LED modules spaced at abnormal intervals among the input images when there are the plurality of LED modules spaced at the abnormal intervals not included in a normal range among the plurality of LED modules.

The image corrector may be configured to give a negative weight to pixel values positioned at boundaries of the plurality of partial images when the abnormal interval is smaller than a lower limit of the normal range.

The image corrector may be configured to decrease the brightness of pixels positioned at boundaries of the plurality of partial images when the abnormal interval is smaller than a lower limit of the normal range.

The image corrector may be configured to give a positive weight to pixel values positioned at boundaries of the plurality of partial images when the abnormal interval is greater than an upper limit of the normal range.

The image corrector may be configured to increase the brightness of pixels positioned at boundaries of the plurality of partial images when the abnormal interval is greater than an upper limit of the normal range.

The image corrector may be configured to correct a partial image to be displayed on a misaligned LED module among the input images when the misaligned LED module exists among the plurality of LED modules.

The image corrector may be configured to shift the partial image to be displayed on the misaligned LED module in a direction opposite to the misalignment.

The image corrector may be configured to shift the partial image to be displayed on the misaligned LED module in a direction opposite to the misalignment by an amount of the misalignment.

The display apparatus may further comprise a memory configured to store the alignment state information.

The memory may store the alignment state information before the input image is received.

The display apparatus may further comprise a sensor configured to obtain the alignment state information.

The sensor may obtain the alignment state information when the input image is received.

In accordance with an aspect of the disclosure, a control method of a display apparatus may comprise: receiving an input image to be displayed on an LED panel including a plurality of LED modules; receiving alignment state information of the plurality of LED modules; correcting the input image based on the alignment state information of the plurality of LED modules; and controlling the LED panel to display the corrected input image.

The correcting the input image may comprise, correcting a plurality of partial images to be displayed on the LED modules spaced at abnormal intervals among the input images when there are the plurality of LED modules spaced at the abnormal intervals not included in a normal range among the plurality of LED modules.

The correcting the input image may comprise, giving a negative weight to pixel values positioned at boundaries of the plurality of partial images when the abnormal interval is smaller than a lower limit of the normal range.

The correcting the input image may comprise, decreasing the brightness of pixels positioned at boundaries of the plurality of partial images when the abnormal interval is smaller than a lower limit of the normal range.

The correcting the input image may comprise, giving give a positive weight to pixel values positioned at boundaries of the plurality of partial images when the abnormal interval is greater than an upper limit of the normal range.

The correcting the input image may comprise increasing the brightness of pixels positioned at boundaries of the plurality of partial images when the abnormal interval is greater than an upper limit of the normal range.

The correcting the input image may comprise, correcting a partial image to be displayed on a misaligned LED module among the input images when the misaligned LED module exists among the plurality of LED modules.

The correcting the input image may comprise, shifting the partial image to be displayed on the misaligned LED module in a direction opposite to the misalignment.

The correcting the input image may comprise, shifting the partial image to be displayed on the misaligned LED module in a direction opposite to the misalignment by an amount of the misalignment.

The method may further comprise storing the alignment state information before the input image is received.

### [Advantageous Effects]

According to a display apparatus and a control method thereof, by correcting the image to be displayed on the LED panel in advance using the alignment state information of the LED module, and then displaying the image on the LED panel, it is possible to prevent the image quality degradation or the distortion of the image even when a defect exists in the alignment state of the LED module.

### [Description of Drawings]

FIGS. 1 and 2 are views illustrating an appearance of a display apparatus according to an embodiment of the present disclosure.
FIG. 3 is a view illustrating a case where an interval between LED modules is normal and abnormal in a display apparatus according to an embodiment of the present disclosure.
FIG. 4 is a diagram illustrating a case where alignment of an LED module is misaligned.
FIG. 5 is a control block diagram of a display apparatus according to an embodiment of the present disclosure.
FIGS. 6 and 7 are views illustrating correction performed when a distance between LED modules is wider than a normal range in a display apparatus according to an embodiment of the present disclosure.
FIGS. 8 and 9 are views illustrating correction performed when a distance between LED modules is narrower than a normal range in a display apparatus according to an embodiment of the present disclosure.
FIGS. 10 and 11 are views illustrating correction performed when alignment between LED modules is misaligned in a display apparatus according to an embodiment of the present disclosure.
FIG. 12 is a diagram illustrating an operation of moving an image by a display apparatus according to an embodiment of the present disclosure.
FIG. 13 is a control block diagram illustrating a configuration of an LED panel in a display apparatus according to an embodiment of the present disclosure.
FIG. 14 illustrates a phenomenon that may occur when a display apparatus does not perform image correction.
FIG. 15 is a view illustrating an example of an image in which distortion is corrected.
FIG. 16 is a view illustrating a case where a corrected image is displayed on a display apparatus.
FIGS. 17 to 19 are views illustrating a phenomenon that may occur when an LED module of an entire row is pushed, correction thereof, and a result thereof.
FIG. 20 is a flowchart illustrating a control method for a case in which an interval of an LED module is out of a normal range in a control method of a display apparatus according to an embodiment.
FIG. 21 is a flowchart illustrating a control method for a case in which alignment of an LED module is misaligned in the control method of a display apparatus according to an embodiment.

### [Best Mode]

### [Mode for Invention]

Configurations shown in the embodiments and drawings described herein is a preferred example of the disclosure, there may be various modifications that can replace the embodiments and drawings of the present specification at the time of filing of the present application.

Also, the terminology used herein is for the purpose of describing particular embodiments only and is not intended to be limiting of the disclosure.

Singular expressions include plural expressions unless the context clearly indicates otherwise.

As used herein, the terms "comprise" and "have" are intended to designate that the features, numbers, steps, actions, components, parts, or combinations thereof described in the specification are present, and it does not preclude the existence or addition of one or more other features or numbers, steps, operations, components, parts or combinations thereof in advance.

Also, terms including ordinal numbers such as "first" and "second" are used to distinguish one component from another, and do not limit the order between the components.

In addition, terms such as "∼ part," "∼ group," "∼ block," "∼ member," and "∼ module" may refer to a unit for processing at least one function or operation. For example, the terms may refer to at least one piece of hardware such as a field-programmable gate array (FPGA)/application specific integrated circuit (ASIC), at least one piece of software stored in a memory, or a processor.

Hereinafter, embodiments of the disclosed invention will be described in detail with reference to the accompanying drawings. Like reference numerals or signs in the accompanying drawings may refer to parts or components that perform substantially the same function.

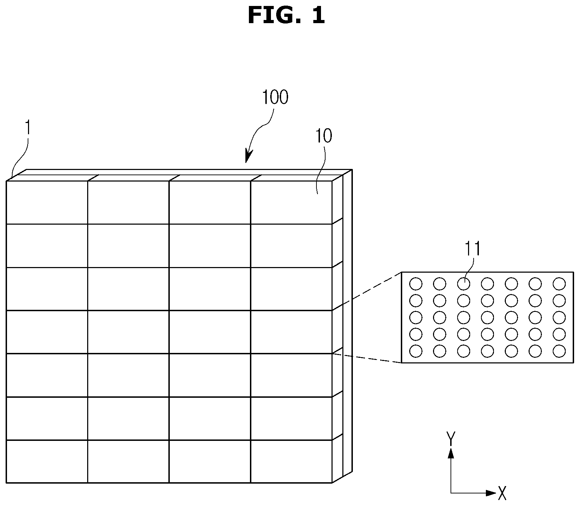

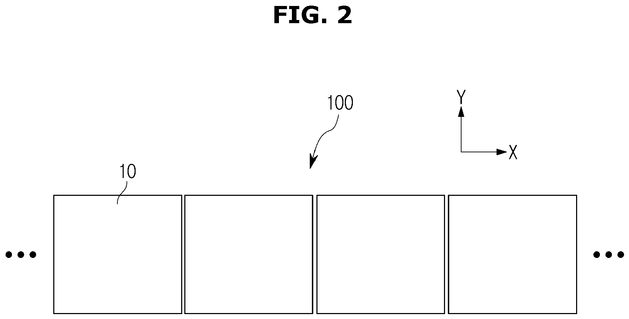

FIGS. 1 and 2 are views illustrating an appearance of a display apparatus according to an embodiment of the present disclosure.

Referring to FIGS. 1 and 2, a display apparatus 100 according to an embodiment may be configured with a plurality of LED modules 10, and each of the LED modules 10 includes a plurality of LED elements 11.

An LED panel 1 may be configured by combining the LED module 10 having the plurality of LED elements 11 arranged according to a desired size and shape.

The LED module 10 may include a red LED element emitting red (R) light, a green LED element emitting green (G) light, and a blue LED element emitting blue (B) light. Each one of the LED elements 11 may be referred to as a dot.

For example, the red LED element, the green LED element and the blue LED element may be arranged in a matrix form, or the red LED element, the green LED element, and the blue LED element may constitute one package, and these packages may implement one pixel.

A plurality of the packages may be arranged in a matrix form to configure one of the LED modules 10. The LED module 10 may function as a minimum unit for displaying contents on the LED panel 1. In addition, the plurality of LED modules 10 may be combined to form a larger unit, or such units may be combined again to form one large screen.

A unit in which the plurality of LED modules 10 are combined is also referred to as a cabinet or a tile. Alternatively, in some cases, the LED module 10 may be referred to as a cabinet or a tile regardless of the terminology that is actually referred to. In this embodiment, a basic unit independently controlled while configuring one screen may be configured as the LED module 10.

In the display apparatus 100 according to an embodiment, as illustrated in FIG. 1, the plurality of LED modules 10 may be arranged in a two-dimensional matrix form, as shown in FIG. 2. It is also possible to be arranged in one dimension. That is, the display apparatus 100 according to an exemplary embodiment does not limit the number of the LED modules 10 constituting the one LED panel 1 or the manner in which the LED modules 10 are arranged.

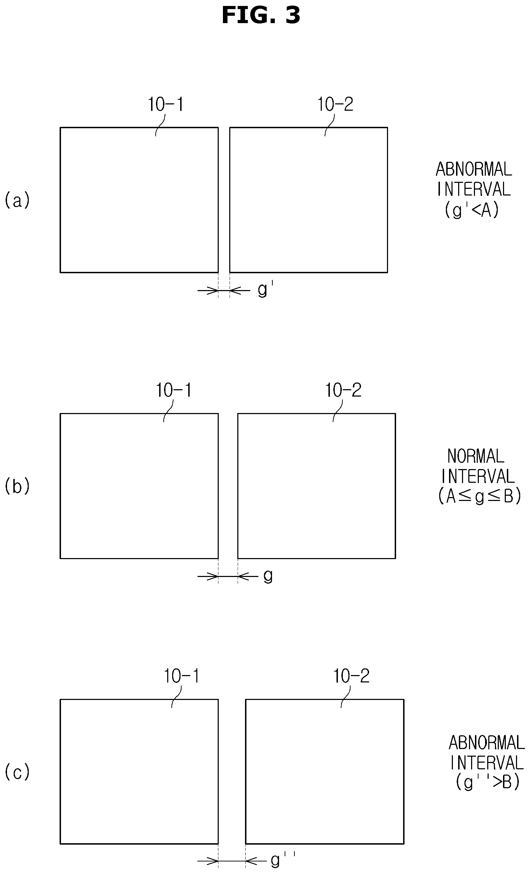

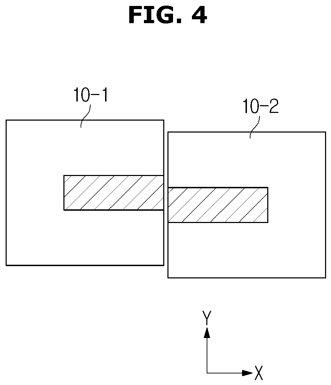

FIG. 3 is a view illustrating a case where an interval between LED modules is normal and abnormal in a display apparatus according to an embodiment of the present disclosure, and FIG. 4 is a diagram illustrating a case where alignment of an LED module is misaligned.

Since the display apparatus 100 has a modular structure manufactured by combining the plurality of LED modules 10, the boundary of the display apparatus 100 may be visually recognized by a viewer if the interval between the LED modules 10 is not constant.

Referring to FIG. 3, when an interval g (g is an integer of 0 or more) between a plurality of LED modules 10-1 and 10-2 is normal, g may be a value included in a predetermined range in which a gap between the plurality of LED modules 10-1 and 10-2 is normal. For example, in the case of A ≤ g ≤ B (A and B are integers greater than or equal to 0 and A = g = B), when a interval g' between the plurality of LED modules 10-1 and 10-2 is an abnormal interval smaller than a lower limit A of a normal range (a), a white seam may be visually recognized at a boundary thereof. When an interval g" between the plurality of LED modules 10-1 and 10-2 is an abnormal interval larger than an upper limit B of a normal range (c), a black seam may be visually recognized at the boundary thereof.

In addition, as illustrated in FIG. 4, when the plurality of LED modules 10-1 and 10-2 are not aligned in a straight line and are shifted, an image displayed on the LED panel 1 can be broken or a break occurs in the image. In addition, when misalignment affects other adjacent LED modules, the entire image may be pushed.

In this embodiment, the case where the LED module is pushed in an X-axis direction is expressed as shifted in the X-axis direction, and the case where the LED module is pushed in a Y-axis direction is expressed as shifted in the Y-axis direction.

In the example of FIG. 4, when the plurality of LED modules 10-1 and 10-2 are pushed in the Y-axis direction, in other words, the case is shifted in the Y-axis direction, or in the case where the plurality of LED modules 10-1 and 10-2 are arranged in the Y-axis direction, it is of course possible to shift in the X-axis direction.

As described above, according to an alignment state between the LED modules 10, the degradation of the image quality or the distortion of the image may occur, such as a black seam or a white seam appears in the image displayed on the display apparatus 100, or the image is broken.

The display apparatus 100 according to an embodiment may correct and output the image to be displayed on the display apparatus 100 to prevent image degradation or image distortion due to poor alignment of the LED module 10. Hereinafter, specific embodiments of the display apparatus 100 will be described.

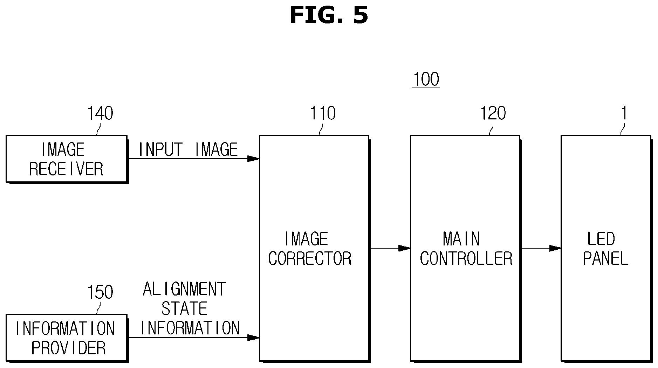

FIG. 5 is a control block diagram of a display apparatus according to an embodiment of the present disclosure.

Referring to FIG. 5, the display apparatus 100 according to an embodiment includes an image receiver 140 for receiving an image to be displayed on the LED panel 1, an information provider 150 for receiving information on the alignment state of the LED module 10, an image corrector 110 for correcting an input image based on the alignment state information of the LED module 10, a main controller 120 for converting the input image into a form that can be displayed by the LED panel 1, and the LED panel 1 for displaying the corrected image output from the image corrector 110.

The input image may be input from an external device through a communication network, or may be input from a recording medium such as a USB, a hard disk drive, an optical disk drive, or a flash memory. Alternatively, it may be input from a separate playback device such as a computer or a DVD player. Accordingly, the image receiver 140 may be an interface that performs wireless communication with an external device or is connected to a recording medium or a reproduction device to receive data.

The information provider 150 provides information about the alignment state of the LED module 10, that is, the alignment state information. Here, the alignment state information of the LED module 10 may include information about whether the alignment of the LED module is misaligned and information about the interval between the LED modules.

The alignment state of the LED module 10 may be directly measured by using a sensor provided in the display apparatus 100, or information measured in the manufacturing or maintenance/repairment process of the display apparatus 100 may be stored in advance. In the manufacturing or maintenance/repairment process of the display apparatus 100, information regarding the alignment state of the LED module 10 may be measured manually.

In the case where the display apparatus 100 directly measures the alignment state of the LED module 10, the information provider 150 may include a sensor for measuring a gap or misalignment of the LED module 10. While the display apparatus 100 is powered on, the alignment between the LED modules may be measured in real time, or a user can take an initial measurement when the power is on and periodically measure the alignment after that, or the measurement may be performed when the user inputs a command for measuring the alignment state between the LED modules through the input unit provided in the display apparatus 100. In addition, when the input image is received at the image receiver 140, the alignment state may be measured.

Alternatively, the measurement may be performed when an external device, for example, a user terminal or a service server/management server, which is wirelessly connected to the display apparatus 100, transmits a status check request for maintenance/repairment.

However, the above-described measuring method is only an example that can be applied to the display apparatus 100 according to an embodiment, and the embodiment of the display apparatus 100 is not limited to the above-described method. In addition to the above-described method, information regarding the alignment state of the LED module 10 may be provided in other ways as well.

The information provider 150 may include a memory. Information about the alignment state automatically measured by the sensor or information measured during the manufacturing or maintenance of the display apparatus 100 may be stored in the memory. The time point at which the information regarding the alignment state is stored in the memory may be before or after reception of the input image.

When the information about the alignment state of the LED module 10 indicates a misalignment state of the display module 100, the image corrector 110 may correct the input image so that image degradation or distortion does not appear in the image displayed on the LED panel 1. In this case, the information about the alignment state transmitted to the image corrector 110 may be information indicating the distance between the adjacent LED modules 10 in units of length or pixels, or information indicating the degree of deviation from the normal range with whether the distance between the LED modules 10 is out of a normal range. In the former case, the image corrector 110 may determine whether the distance between the LED modules 10 is included in the normal range based on preset reference values.

In addition, the information transmitted to the image corrector 110 may be information indicating whether the alignment of the adjacent LED module 10 is misaligned with the direction and degree of misalignment. For example, the degree of deviation may be expressed in units of pixels.

The image corrector 110 may include a memory in which a program for performing correction on an input image is stored and a processor for executing the stored program.

The corrected image corrected by the image corrector 110 may be input to the main controller 120, and the main controller 120 may convert the corrected image into image data displayable on the LED panel 1 and transmit the corrected image to the LED panel 1.

The main controller 120 may include a memory for storing a program for performing image processing and a processor for executing the stored program. The image corrector 110 and the main controller 120 may share at least one of a memory and a processor. The memory and the processor implementing the image corrector 110 and the main controller 120 may be integrated on a single chip.

When the image corrector 110 corrects the input image according to the alignment state of the LED module 10 and transmits the input image to the LED panel 1 through the main controller 120, the LED panel 1 displays the corrected input image. As a result, even when the interval between the LED modules 10 is out of the normal range or the alignment of the LED module 10 is misaligned, the image displayed on the LED panel 1 may not exhibit deterioration in image quality or image distortion.

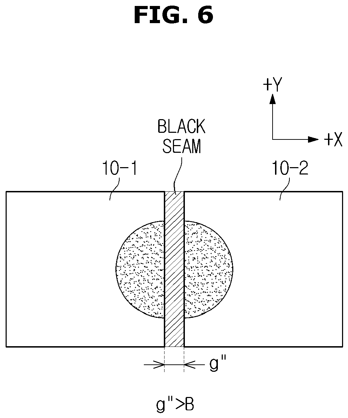

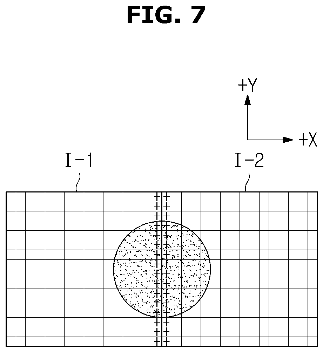

FIGS. 6 and 7 are views illustrating correction performed when a distance between LED modules is wider than a normal range in a display apparatus according to an embodiment of the present disclosure.

When the interval between the first LED module 10-1 and the second LED module 10-2 adjacent to each other is larger than a first reference value, which is the upper limit of the normal range, and when an image is displayed through the first LED module 10-1 and the second LED module 10-2, as shown in FIG. 6, a black seam may be visually recognized at a boundary thereof.

Therefore, when the distance between the first LED module 10-1 and the second LED module 10-2 adjacent to each other is greater than the first reference value, the image corrector 110 performs correction to prevent the black seam from seeing the input image.

As shown in FIG. 7, the image corrector 110 may perform correction to a first partial image 1-1 assigned to be displayed on the first LED module 10-1 and a second partial image I-2 assigned to be displayed on the second LED module 10-2 among an entire input image I. In detail, the brightness of an image displayed by the corresponding pixel may be increased by applying a + weighting value to a pixel value located at a boundary between the first partial image 1-1 and the second partial image 1-2.

At this time, the amount of increased brightness, that is, the + weight value may be preset as a default value or may be set differently according to the distance between the two LED modules 10-1 and 10-2. In the latter case, as the distance between the two LED modules 10-1 and 10-2 increases, the amount of increased brightness may also increase.

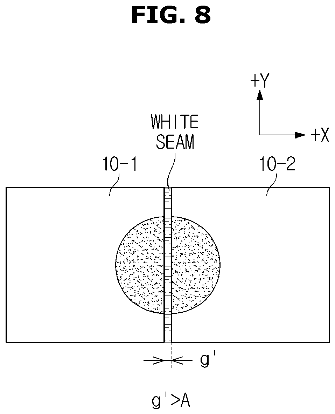

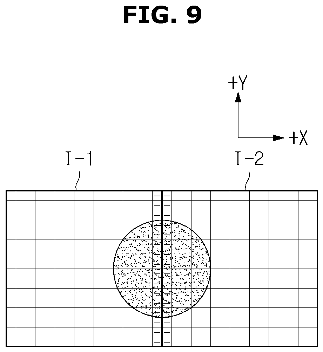

FIGS. 8 and 9 are views illustrating correction performed when a distance between LED modules is narrower than a normal range in a display apparatus according to an embodiment of the present disclosure.

When the distance between the first LED module 10-1 and the second LED module 10-2 adjacent to each other is smaller than a second reference value, which is the lower limit of the normal range, and when the image is displayed through the second LED module 10-2, as shown in FIG. 8, the white seam may be visually recognized at the boundary thereof.

Therefore, the image corrector 110 corrects to prevent the visibility of the white seam for the input image when the distance between the first LED module 10-1 and the second LED module 10-2 adjacent to each other is smaller than the second reference value.

As shown in FIG. 9, the image corrector 110 may perform correction to the first partial image 1-1 assigned to be displayed on the first LED module 10-1 and the second partial image 1-2 assigned to be displayed on the second LED module 10-2 among the entire input image I. In detail, the brightness of an image displayed by the corresponding pixel may be decreased by applying a - weighting value to a pixel value located at a boundary between the first partial image 1-1 and the second partial image 1-2.

In this case, the amount of reduced brightness may also be preset as a default value, or may be set differently according to the distance between the two LED modules 10-1 and 10-2. In the latter case, the closer the distance between the two LED modules 10-1 and 10-2, the greater the amount of reduced brightness.

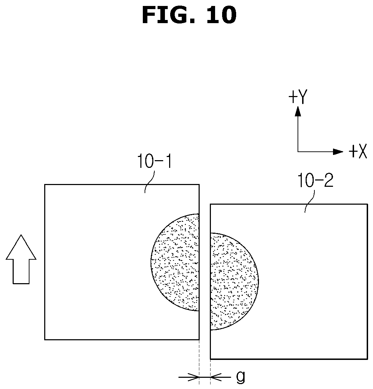

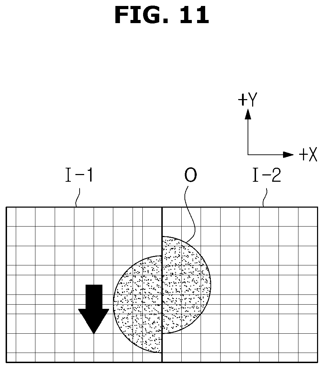

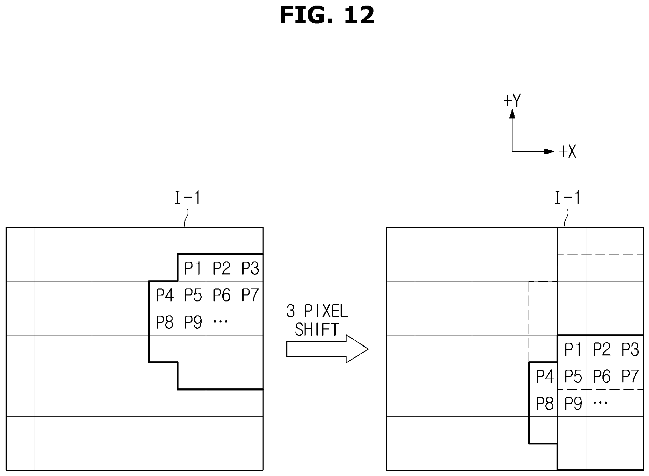

FIGS. 10 and 11 are views illustrating correction performed when alignment between LED modules is misaligned in a display apparatus according to an embodiment of the present disclosure. FIG. 12 is a diagram illustrating an operation of moving an image by a display apparatus according to an embodiment of the present disclosure.

Even when an interval g between the first LED module 10-1 and the second LED module 10-2 adjacent to each other is included in the normal range, and if the alignment is misaligned, when an image is displayed through the first LED module 10-1 and the second LED module 10-2, as shown in FIG. 10, the image may be cut off or broken..

Therefore, when the image corrector 110 is misaligned between the first LED module 10-1 and the second LED module 10-2 adjacent to each other, by correcting the input image in advance, it may be possible to prevent a crack or a break from appearing in the images displayed on the first LED module 10-1 and the second LED module 10-2.

As shown in FIG. 11, the image corrector 110 may perform correction to the first partial image 1-1 assigned to be displayed on the first LED module 10-1 and the second partial image 1-2 assigned to be displayed on the second LED module 10-2 among the entire input image I. In detail, the image corrector 110 may move one of the first partial image I-1 and the second partial image 1-2 in a direction opposite to the direction in which the first LED module 10-1 and the second LED module 10-2 are pushed.

As shown in FIG. 10, when the first LED module 10-1 is pushed upward, the image corrector 110 may move the first partial image I-1 downward. Moving the image may mean that the image corrector 110 shifts a pixel value representing information of an image represented by each pixel.

The image corrector 110 may move the image by the extent that the LED module 10 is displaced. As an example, the degree of deviation of the LED module 10 may be expressed by the number of pixels. It is also possible to move the entire partial image, or to move only the portion where an object O excluding the background exists.

Referring to the example of FIG. 12, when the first LED module 10-1 is pushed by 3 pixels in an upward direction, the image corrector 110 may move the first partial image I-1 by 3 pixels in a downward direction. In this case, only the pixels in which the object O exists among the first partial image 1-1 may be moved by 3 pixels in the downward direction.

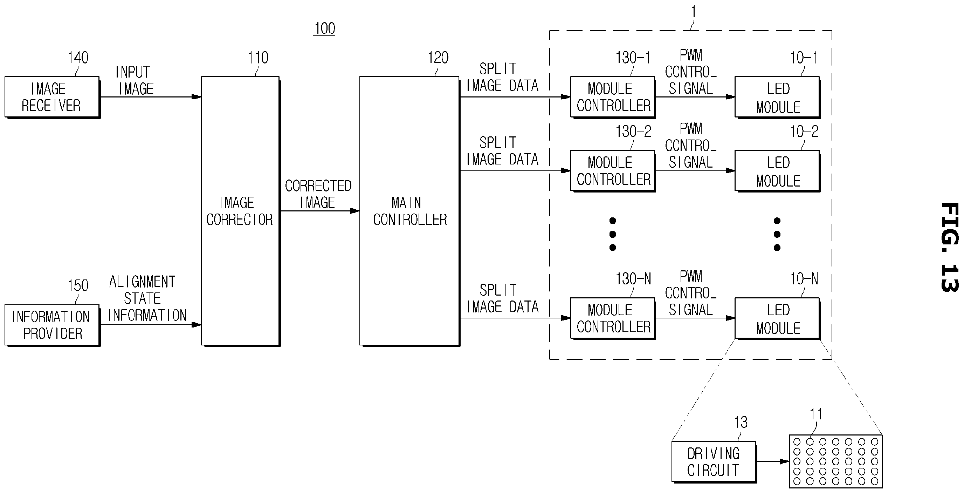

FIG. 13 is a control block diagram illustrating a configuration of an LED panel in a display apparatus according to an embodiment of the present disclosure.

The LED panel 1 includes a plurality of LED modules 10-1, 10-2, ..., 10-N (where N is an integer of 2 or more) and each of the LED modules 10-1, 10-2, ..., 10-N) includes a plurality of module controllers 130-1, 130-2, ..., 130-N.

As described above, the corrected image corrected in the image corrector 110 is input to the main controller 120. The main controller 120 converts the corrected image into image data in a form that the LED panel 1 can output, and divides the corrected image according to a plurality of the LED modules constituting the LED panel 1. If there are N LED modules (N is an integer greater than or equal to 2), the main controller 120 may divide the corrected image into N.

In addition, the main controller 120 allocates the image data to each of the LED modules 10-1, 10-2, ..., 10-N corresponding thereto. That is, each of the LED modules 10-1, 10-2,..., 10-N is allocated a divided correction image to be output by the corresponding LED module.

The main controller 120 transmits the divided image data for the corrected image to each of the module controllers 130-1, 130-2,..., 130 -N corresponding to the corrected image.

Based on the transmitted divided image data, each of the module controllers 130-1, 130-2,. 130-N can generate a control signal so that each of the LED modules outputs a corrected image allocated thereto. For example, when the LED module 10 is driven in a PWM method, each of the module controllers 130-1, 130-2, ..., 130-N generates PWM control signals for three RGB channels, thereby providing the signal to the LED modules 10-1, 10-2, ..., 10-N.

Each of the LED modules 10-1, 10-2,..., 10-N may include the plurality of LED elements 11 and a driving circuit 13 for driving them. The driving circuit 13 may drive the plurality of LED elements 11 according to the transmitted PWM control signal to display a corrected image allocated to the corresponding LED module 10.

Meanwhile, the above-described operation of the main controller 120 may be similarly performed even when correction is not performed on the input image. If a defect does not exist in the alignment state of the LED module 10, the image corrector 110 may not perform the correction. In this case, the input image may be transferred to the main controller 120 and input to the module controller 130 through a process of shape conversion and image segmentation. The module controller 130 may display the input image by controlling each of the LED modules 10-1, 10-2,..., 10-N in the above-described operation.

According to an embodiment, it is also possible to implement image correction to be performed in each of the module controllers 130-1, 130-2,..., 130 -N. In this case, the input image transmitted from the image receiver 140 and the alignment state information transmitted from the information provider 150 may be input to the main controller 120. The main controller 120 may divide the input image and transfer the input image to each of the module controllers 130-1, 130-2,..., 130 -N together with the alignment state information. The module controller 130 to which the divided image requiring correction is allocated may correct the divided image based on the alignment state information.

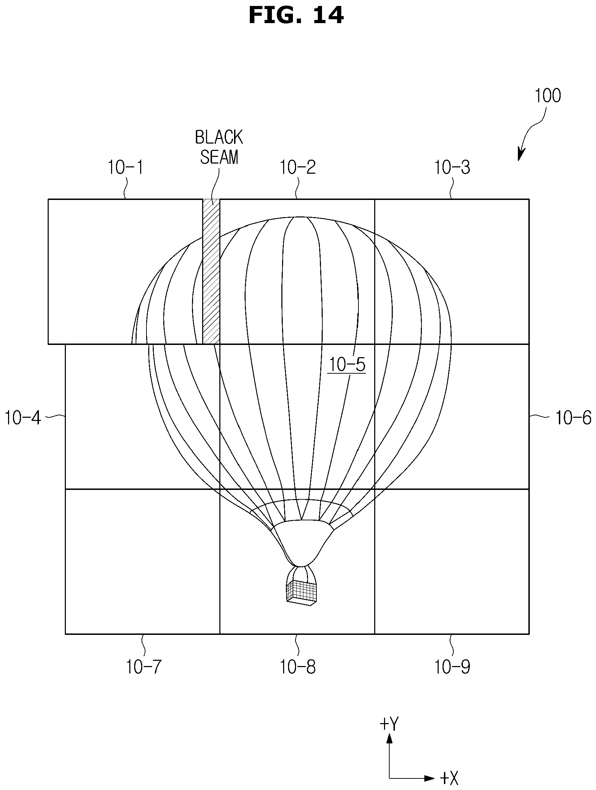

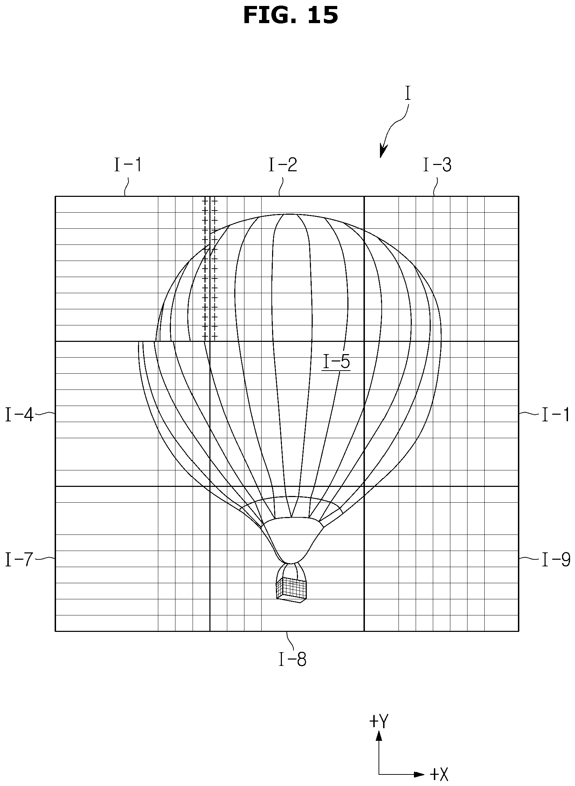

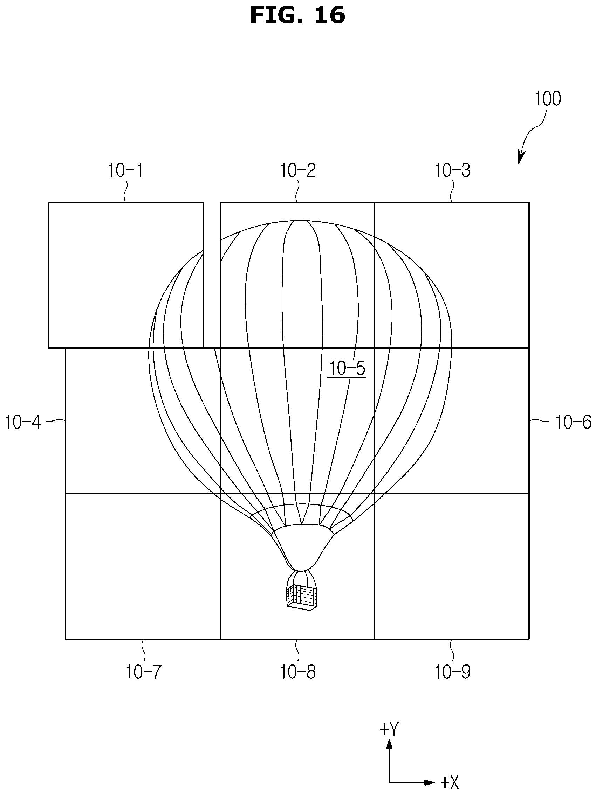

FIG. 14 illustrates a phenomenon that may occur when a display apparatus does not perform image correction, FIG. 15 is a view illustrating an example of an image in which distortion is corrected, and FIG. 16 is a view illustrating a case where a corrected image is displayed on a display apparatus.

FIG. 14 illustrates that the first LED module 10-1 is spaced beyond the normal range from the second LED module 10-2 adjacent to the right side, and is pushed in the left direction to a fourth LED module 10-4 adjacent to the lower side.

In this embodiment, terms indicating the left, right, upper side, lower side, and the like indicate relative directions based on a state of looking at the front surface of the LED panel 1. When an XY-axis direction is set as shown in FIG. 14, a + X direction corresponds to the right direction, a -X direction corresponds to the left direction, a + Y direction corresponds to an upper direction, and a -Y direction corresponds to a lower direction.

In the case where a misalignment condition as shown in FIG. 14 occurs, when the input image on which the correction is not performed is displayed on the LED panel 1, the black seam may be visually recognized at the boundary between the first LED module 10-1 and the second LED module 10-2, and a cracking phenomenon may appear in an image displayed at the boundary between the first LED module 10-1 and the fourth LED module 10-4.

Therefore, the image corrector 110 may perform correction to the first partial image I-1 allocated as displayed in the first LED module 10-1 and the second partial image 1-2 allocated as displayed in the second LED module 10-2 among the entire input image I.

In order to prevent the black seam from being visible at the boundary between the first LED module 10-1 and the second LED module 10-2, as illustrated in FIG. 15, the brightness of an image displayed by a corresponding pixel may be increased by applying the + weighting value to a pixel value located at a boundary between the first partial image 1-1 and the second partial image 1-2.

The image corrector 110 may move the first partial image I-1 to the right in order to prevent the appearance of a crack in the images displayed on the first LED module 10-1 and the second LED module 10-2.

For example, when the first LED module 10-1 is pushed by 2 pixels in the left direction, the image corrector 110 may shift the first partial image I-1 by 2 pixels in the right direction.

It is also possible to shift only the pixels of the part where the object is displayed without moving the entire first partial image 1-1.

As shown in FIG. 15, when the input image is corrected and the corrected input image is transmitted to the LED panel 1, the corrected input image may be displayed on the LED panel 1 as shown in FIG. 16. Since the brightness of the image displayed on the boundary between the first LED module 10-1 and the second LED module 10-2 is increased, the black seam may not be viewed. In addition, since the first partial image 1-1 allocated to the first LED module 10-1 is moved to the right direction, distortion may be canceled. Therefore, it is possible to prevent the image displayed on the first LED module 10-1 and the fourth LED module 10-4 from having a cracking phenomenon.

In FIGS. 14 to 16 described above, a case where the alignment of the first LED module 10-1 is misaligned is illustrated as an example for convenience of description. However, misalignment of one LED module may affect other adjacent LED modules and push the entire LED module in a row or column.

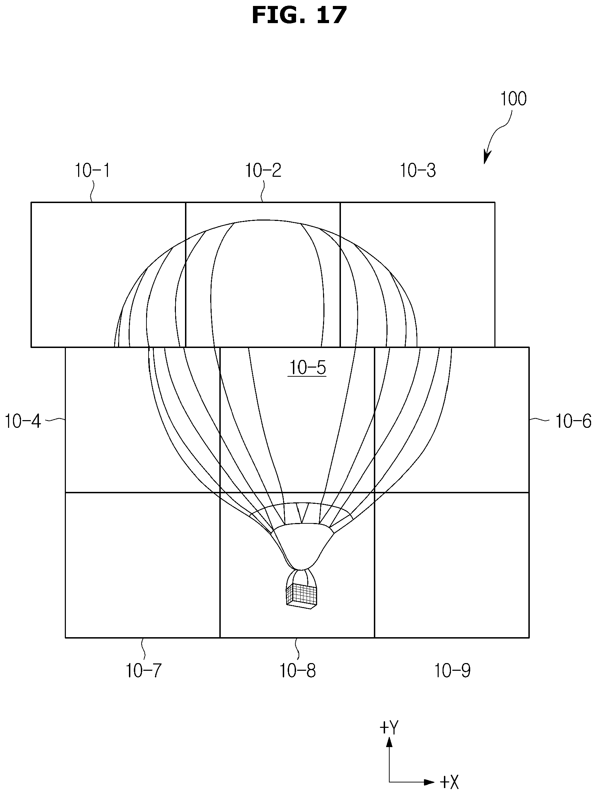

FIGS. 17 to 19 are views illustrating a phenomenon that may occur when an LED module of an entire row is pushed, correction thereof, and a result thereof.

FIG. 17 illustrates a case in which the first LED module 10-1, the second LED module 10-2, and a third LED module 10-3 arranged in the same row are all pushed to the left.

In the case where misalignment occurs as shown in FIG. 17, when an input image on which no correction has been performed is displayed on the LED panel 1, the image displayed on the boundary of the first LED module 10-1, the second LED module 10-2, the third LED module 10-3, the fourth LED module 10-4, a fifth LED module 10-5, and a sixth LED module 10-6 may appear with a crack phenomenon.

Therefore, the image corrector 110 may perform correction on the first partial image I-1 allocated to the first LED module 10-1, the second partial image 1-2 allocated to be displayed on the second LED module 10-2, and a third partial image 1-3 allocated to be displayed on the third LED module 10-3 among the entire input image I.

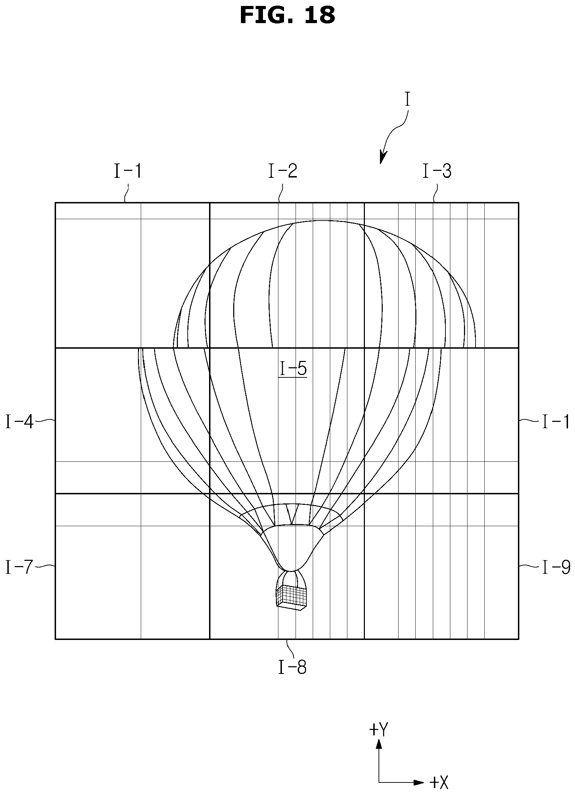

As shown in FIG. 18, the image corrector 110 may move the first partial image I-1, the second partial image 1-2, and the third partial image 1-3 to the right. For example, when the first LED module 10-1, the second LED module 10-2, and the third LED module 10-3 are pushed by 2 pixels to the left, the image corrector 110 may shift the first partial image I-1, the second partial image 1-2, and the third partial image 1-3 by 2 pixels to the right.

In addition, the first partial image 1-1, the second partial image 1-2, and the third partial image 1-3 may shift only the pixels of the portion where the object is displayed without moving the entire the first partial image I-1, the second partial image 1-2, and the third partial image I-3.

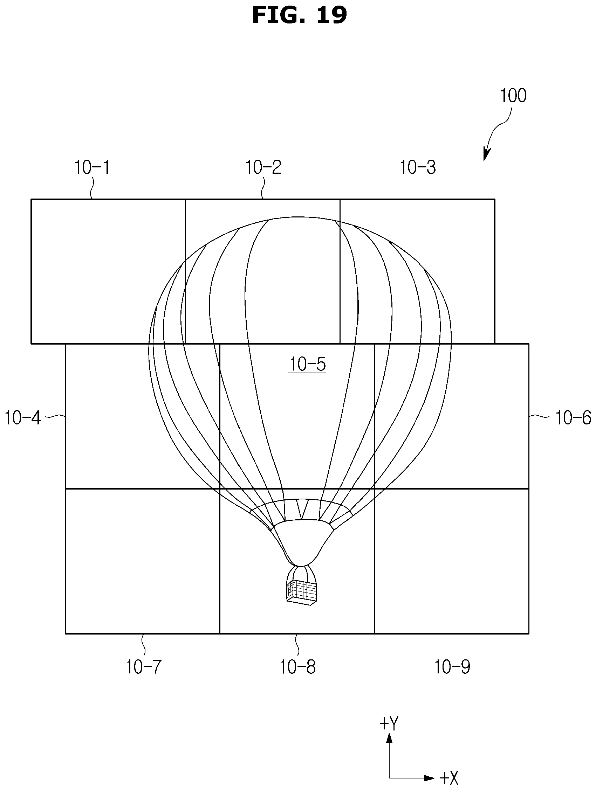

If the input image is corrected as shown in FIG. 18 and the corrected input image is transmitted to the LED panel 1, the corrected input image may be displayed on the LED panel 1 as shown in FIG. 19. Since the partial images I-1, 1-2, and 1-3 allocated to the first LED module 10-1, the second LED module 10-2, and the third LED module 10-3 are shifted to the right direction, the distortion can be canceled out. Accordingly, it is possible to prevent the cracking phenomenon of the image displayed on the first LED module 10-1, the second LED module 10-2, the third LED module 10-3, the fourth LED module 10-4, the fifth LED module 10-5, and the sixth LED module 10-6.

Hereinafter, an embodiment of a control method of a display apparatus will be described. In the control method of the display apparatus according to an embodiment, the above-described display apparatus 100 may be used. Therefore, the above descriptions of FIGS. 1 to 19 may be equally applied to the control method of the display apparatus, unless otherwise noted.

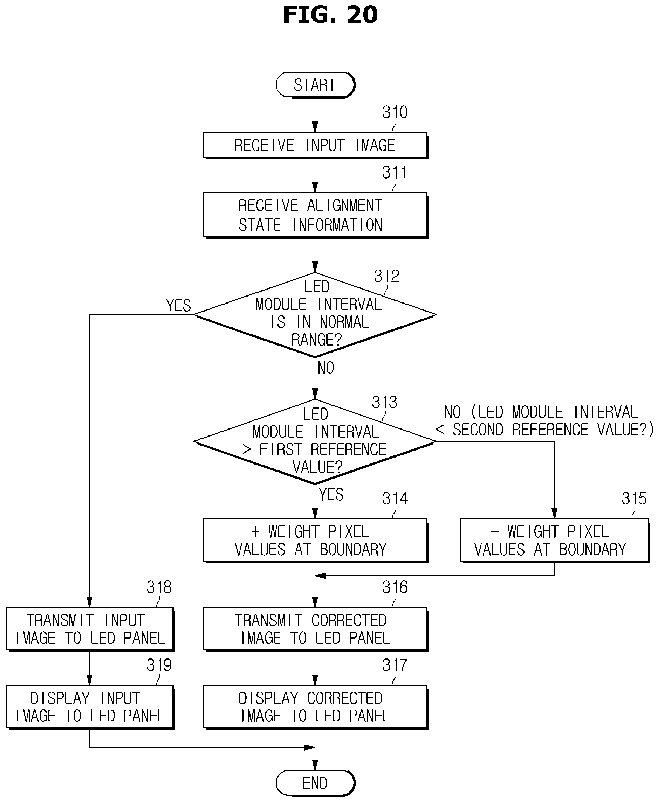

FIG. 20 is a flowchart illustrating a control method for a case in which an interval of an LED module is out of a normal range in a control method of a display apparatus according to an embodiment.

Referring to FIG. 20, the display apparatus receives an input image (310), and receives the alignment state information of the LED module (311). When the input image is received, the alignment state information of the LED module may be directly measured by the information provider 150 of the display apparatus 100 and transmitted to the image corrector 110. Regardless of receiving the input image, the alignment state information of the LED module may be stored in advance and transmitted to the image corrector 110 when the input image is received.

It is determined whether the interval between the LED modules is the normal range (312). The determination of whether the interval between the LED modules 10 is in the normal range may be performed by the image corrector 110, or after the determination by the information provider 150. The determination result may be transmitted to the image corrector 110. Alternatively, the determination result may be input externally.

The normal range is a range in which the gap between the LED modules can be viewed as a normal interval, which may mean a range in which the black seam or the white seam is not visible to the viewer. The normal range can be preset.

If the gap between the LED modules is not in the normal range (No in 312), and if the interval between the LED modules is greater than the first reference value representing the upper limit of the normal range (YES in 313), the display apparatus judges that the black seam may appear between the LED modules, and the image corrector 110 may increase the brightness of an image displayed by the corresponding pixel by giving the + weighting value (314) to a pixel value located at a boundary between the LED modules. Here, the pixel value located at the boundary between the LED modules means the pixel value of the position corresponding to the boundary in the partial image corresponding to the corresponding LED module.

If the interval between the LED modules is less than the second reference value representing the lower limit of the normal range (No in 313), the display apparatus judges that the white seam may appear between the LED module, and the image corrector 110 may reduce the brightness of an image displayed by the corresponding pixel by assigning the -weighting value (315) to a pixel value located at a boundary between the LED modules.

The above operation may be performed for each of the LED modules 10.

The image corrector 110 transmits the corrected image to the LED panel 1 (316), and the LED panel 1 displays the transmitted corrected image (317). The corrected image is transmitted to the LED panel 1 through the main controller 120. Since the corrected image is transmitted to the LED panel 1 through the main controller 120, the main controller 120 converts the corrected image into image data that can be displayed by the LED panel 1 and transmits the image to the LED panel 1. Since the corrected image has already been calibrated to prevent the black seam or the white seam from being visible, the black seam or the white seam is not visually recognized even if the interval between the LED modules 10 constituting the LED panel 1 is abnormal.

In addition, when the LED module interval is included in the normal range (Yes in 312), the input image is transmitted to the LED panel without correction (318), and the LED panel 1 displays the input image (319). Even in this case, the input image is transmitted to the LED panel 1 through the main controller 120, and the main controller 120 converts the input image into image data that can be displayed by the LED panel 1 and transmits the image to the LED panel 1.

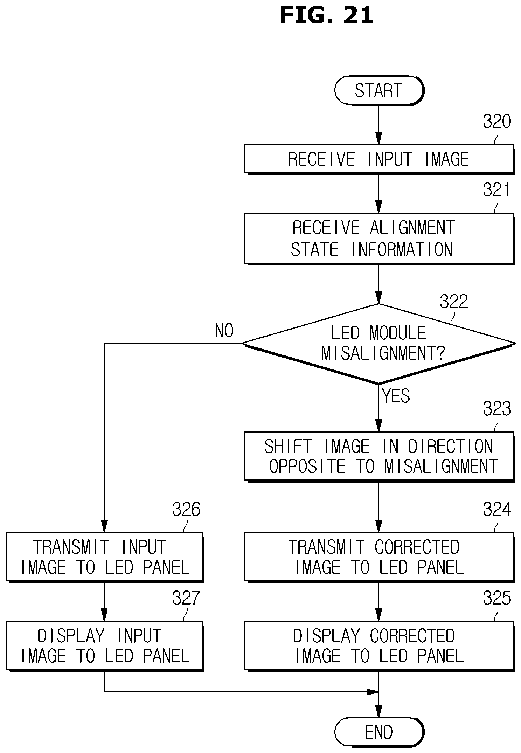

FIG. 21 is a flowchart illustrating a control method for a case in which alignment of an LED module is misaligned in the control method of a display apparatus according to an embodiment. This example assumes that the spacing between the LED modules is normal.

Referring to FIG. 21, an input image is received (310), and the alignment state information of the LED module is received (311).

It is determined whether the alignment of the LED module is misaligned (322). It may be made by the image corrector 110, or the determination result may be transmitted to the image corrector 110 after being made by the information provider 150. Alternatively, the determination result may be input externally. The determination result may include the degree of misalignment with a misalignment direction.

The image corrector 110 shifts the image in a direction opposite to that of the misalignment (323). In this case, the image corrector 110 may move the image by the degree of misalignment, and may move the image to the partial image to be displayed on the misalignment of the LED module 10. Description of the movement of the image is the same as described above in the embodiment of the display apparatus.

The above operation may be performed for each of the LED modules 10.

The image corrector 110 transmits the corrected image to the LED panel 1, and the LED panel 1 displays the transmitted corrected image (325). As described above, the correction image may be transmitted to the LED panel 1 through the main controller 120, and the main controller 120 may convert the corrected image into a form that can be displayed on the LED panel 1 and transmit the corrected image to the LED panel 1.

In addition, when the LED module interval is included in the normal range (Yes in 312), the input image is transmitted to the LED panel without correction (318), and the LED panel 1 displays the input image (319). Even in this case, the input image is transmitted to the LED panel 1 through the main controller 120, therefore the main controller 120 converts the input image into image data that can be displayed by the LED panel 1 and transmits the image to the LED panel 1.

According to the aforementioned display apparatus and its control method, the image to be displayed on the LED panel is corrected in advance by using the alignment state information of the LED module and then displayed on the LED panel, even if there is a defect in the alignment state of the LED module, it is possible to prevent deterioration of image quality or distortion of an image.

### [DESCRIPTION OF SYMBOLS]

100: display apparatus
110: image corrector
111: transceiver
112: receiver
130: module controller
10: LED module
11: LED element

## Claims

1. A display apparatus, comprising:
an LED panel including a plurality of LED modules;
an image receiver configured to receive an input image to be displayed on the LED panel;
an image corrector configured to correct the input image based on alignment state information of the plurality of LED modules; and
a controller configured to control the LED panel to display the corrected input image.

2. The display apparatus of claim 1, wherein the image corrector is configured to correct a plurality of partial images to be displayed on the LED modules spaced at abnormal intervals among the input images when there are the plurality of LED modules spaced at the abnormal intervals not included in a normal range among the plurality of LED modules.

3. The display apparatus of claim 2, wherein the image corrector is configured to give a negative weight to pixel values positioned at boundaries of the plurality of partial images when the abnormal interval is smaller than a lower limit of the normal range.

4. The display apparatus of claim 2, wherein the image corrector is configured to decrease the brightness of pixels positioned at boundaries of the plurality of partial images when the abnormal interval is smaller than a lower limit of the normal range.

5. The display apparatus of claim 2, wherein the image corrector is configured to give a positive weight to pixel values positioned at boundaries of the plurality of partial images when the abnormal interval is greater than an upper limit of the normal range.

6. The display apparatus of claim 2, wherein the image corrector is configured to increase the brightness of pixels positioned at boundaries of the plurality of partial images when the abnormal interval is greater than an upper limit of the normal range.

7. The display apparatus of claim 1, wherein the image corrector corrects a partial image to be displayed on a misaligned LED module among the input images when the misaligned LED module exists among the plurality of LED modules.

8. The display apparatus of claim 7, wherein the image corrector shifts the partial image to be displayed on the misaligned LED module in a direction opposite to the misalignment.

9. The display apparatus of claim 7, wherein the image corrector shifts the partial image to be displayed on the misaligned LED module in a direction opposite to the misalignment by an amount of the misalignment.

10. The display apparatus of claim 1 further comprising:
a memory configured to store the alignment state information.

11. The display apparatus of claim 10, wherein the memory stores the alignment state information before the input image is received.

12. The display apparatus of claim 1 further comprising:
a sensor configured to obtain the alignment state information.

13. The display apparatus of claim 12, wherein the sensor obtains the alignment state information when the input image is received.

14. A control method of a display apparatus comprising:
receiving an input image to be displayed on an LED panel including a plurality of LED modules;
receiving alignment state information of the plurality of LED modules;
correcting the input image based on the alignment state information of the plurality of LED modules; and
controlling the LED panel to display the corrected input image.

15. The method of claim 14, wherein the correcting the input image comprises, correcting a plurality of partial images to be displayed on the LED modules spaced at abnormal intervals among the input images when there are the plurality of LED modules spaced at the abnormal intervals not included in a normal range among the plurality of LED modules.
